# EUROPEAN PATENT SPECIFICATION

(11) **EP 3 754 816 B1**
(45) Date of publication and mention of the grant of the patent: **20.03.2024**
(21) Application number: 19753682.4
(22) Date of filing: 25.01.2019
(51) Int. Cl.: H02K 5/10, H02K 5/04, H02K 5/14, H02K 5/15, H02K 5/22, H02K 23/04

(54) **MOTOR AND ELECTRIC DEVICE WITH THE SAME**
MOTOR UND ELEKTRISCHE VORRICHTUNG DAMIT
MOTEUR ET DISPOSITIF ÉLECTRIQUE LE COMPORTANT

(30) Priority: 15.02.2018 JP 2018024845
(43) Date of publication of application: 23.12.2020
(73) Proprietor: Panasonic Intellectual Property Management Co., Ltd., Osaka-shi, Osaka 540-6207 (JP)
(72) Inventor: OGIHARA Takaki, Osaka 540-6207 (JP); ASANO Takahiro, Osaka 540-6207 (JP); TOYA Kazuo, Osaka 540-6207 (JP); MIZUKAMI Hirofumi, Osaka 540-6207 (JP); UCHIDA Yasuharu, Osaka 540-6207 (JP)
(74) Representative: SSM Sandmair
(86) International application number: PCT/JP2019/002420
(87) International publication number: WO 2019/159649

(56) References cited:
- EP-A2- 1 041 700
- WO-A1-2007/060066
- DE-A1- 19 643 289
- DE-A1- 19 728 802
- DE-A1- 19 736 782
- DE-A1-102007 049 209
- DE-C1- 19 809 571
- JP-A- 2000 102 227
- JP-A- 2000 248 957
- JP-A- 2001 280 501
- JP-A- 2002 295 683
- JP-A- 2005 027 366
- JP-A- 2005 027 366
- JP-A- 2007 089 388
- JP-A- 2011 256 913
- JP-A- 2015 031 194
- KR-A- 20030 008 040
- KR-U- 20000 006 751
- US-B2- 8 075 285

## Description

### TECHNICAL FIELD

The present invention relates to a motor and electric equipment including the motor, and more particularly to a motor with a structure preventing the entry of moisture, oil, or any other fluid from the outside.

### BACKGROUND ART

In recent years, motors have widely been used for electric equipment, electric power tools, or vehicles. For example, small-sized motors are used for driving hydraulic pumps in anti-lock braking systems (ABS). The motors used for these purposes are required to have a high reliability as well as further reduced size and weight. Motors used for the ABS are located in the engine compartments of vehicles, which may cause water to splash the motors from the outside in case of rain, for example. Sufficient waterproof measures need thus to be made.

To solve the problem, the background art (see, e.g., Patent document 1) suggests forming a wall in an end plate press-fitted into and covering an opening of a frame that serves as an outer shell of a motor. The wall extends, with a gap about a rotary shaft rotatably supported by the bearing, between a commutator and a bearing. For electrical insulation with a rotor or a stator in the motor, the end plate is generally made of a resin material.

KR 2000 0006751 U discloses a sealed structure of a motor for antilock brakes (ABS) used mainly in automobiles, and the main purpose of the invention is to install a separate sealing means between the pole housing and the end plate to thoroughly block the penetration of moisture, and to form a drainage means on the side of the bearing engagement part of the end plate so that water can easily drain out, and to further improve the productivity of the motor. A characteristic means of accomplishing this is the use of the body of the automobile A.B. brake. S brake motor for use in conjunction with the body of a vehicle brake, comprising a cap-shaped pole housing for housing a rotor comprising a rotating shaft and a stator installed around the periphery of the rotor, and an end plate having a flat part perforated with a through hole while blocking the lower opening of said pole housing, and a bearing for supporting the rotating shaft in a central groove, wherein said pole housing forms an outwardly deflecting bend at the end of the opening and a downwardly deflecting bend at the end of the bend, and wherein said end plate forms a single layer on its outer circumference so that a space is formed between the bends of said pole housing and said end plate, and wherein a sealing member is interposed in said space, the height of the sealing member being higher than the bend of the pole housing, for engaging said body.

WO 2007/060066 A1 discloses a motor/pump assembly, in particular for a motor vehicle braking apparatus. The motor is fixed axially on an end face of the pump housing. In this case, the brush plate forms the termination face of the motor with respect to the pump housing. The boundary area of the motor housing which faces the pump housing and that area of the brush plate which is radially adjacent to the boundary area of the motor housing each have a seal-accommodating step, into which a seal is inserted which is compressed axially by the pump housing being fixed to the motor.

JP 2015 031194 A discloses: A gear pump includes an assembly in which a pair of gears is arranged between a seal block and a side plate, and a halved case in which the assembly is accommodated. An annular groove part is formed on a surface facing the case of the side plate, and an annular seal member is accommodated and arranged in the annular groove part. In the annular groove part, the width is made to be wider than the width of the annular seal member, and the annular groove part has a gap in the width direction between itself and the annular seal member, and also it has placement surfaces for placing the annular seal member and a bottom surface deeper than the placement surface. The annular seal member elastically deforms to the full width of the annular groove part, when it is pressed between the case and the side plate.

### CITATION LIST

### PATENT DOCUMENT

[Patent Document 1] Japanese Unexamined Patent Publication No. 2002-204548

### SUMMARY OF THE INVENTION

### TECHNICAL PROBLEM

The moisture or any other fluid mainly enters the inside of the frame through the joint between the end plate and the frame. To address the problem, a seal ring, such as an O-ring or an X-ring, is disposed at the joint to prevent the entry of the moisture or any other fluid into the frame. On the other hand, at the assembly of the motor and the load, a pressure is applied from the load onto the end plate in the axial direction, which is then maintained.

It is however generally known that a temperature rise with a pressure applied to a resin material causes deformations of the resin material due to thermal creep. At a thermal creep deformation of the end plate, the contact pressures between (i) the seal ring and (ii) the end plate, the frame, and the load decrease to cause gaps at the contacts between the seal ring and these members. If water splashes the gap from the outside, the water enters the inside of the motor, which may significantly degrade the reliability and insulation properties of the motor.

The present invention was made in view of the problem. It is an objective of the present invention to provide a highly reliable motor that maintains the sealing properties of the joint between an end plate and a frame, and electrical equipment using the motor.

### SOLUTION TO THE PROBLEM

In order to achieve the objective, a motor according to the present invention includes an end plate that houses a seal ring and has, on the circumference of its outer surface, a surface inclined downward.

The invention is set out in the appended independent claims.

This configuration makes it possible to increase the contact surface pressure of the seal ring at the corner defined by the bottom of the step and the inner circumferential surface of the frame. This allows maintenance of the sealing properties at the corner, even if the end plate is deformed under the influence of heat or a pressure, and prevention in the entry of moisture or any other fluid into the frame, thereby achieving a highly reliable motor.

The bottom of the step may be an inclined surface extending linearly from the side surface of the step to the radially outer edge of the outer surface of the end plate.

The bottom of the step includes: a first bottom at a radially outer end thereof; and at a radially inner end, a second bottom continuous with the first bottom. The first bottom may extend to the radially outer edge of the outer surface of the end plate, and is inclined radially outward toward the bottom of the frame, whereas the second bottom may be inclined in a direction axially different from the first bottom.

This configuration makes it possible to increase the contact surface pressure of the seal ring at the corner defined by the first bottom and the inner circumferential surface of the frame. This allows maintenance of the sealing properties at the corner, even if the end plate is deformed under the influence of heat or a pressure, and prevention in the entry of moisture or any other fluid into the frame, thereby achieving a highly reliable motor.

The second bottom may be orthogonal to the side surface of the step or may be a surface inclined opposite to the first bottom.

The first bottom may be an inclined surface extending linearly from the radially outer edge to a radially inner part of the end plate. The radially outer edge of the first bottom may have a fillet curving radially outward toward the bottom of the frame.

In one preferred embodiment, the first bottom has a radial width that is a half or less a radial width of the bottom of the step.

This configuration makes it possible to reduce a decrease in the amount of the seal ring radially biting into the corner defined by the first bottom and the inner circumferential surface of the frame and to maintain the contact surface pressure onto the inner circumferential surface of the frame at a desired value or more. This allows maintenance of the sealing properties at the corner even at a thermal creep deformation of the end plate.

The rotor may include: an armature core penetrated by and connected to the rotary shaft; salient poles arranged circumferentially at a predetermined interval in the armature core; armature windings, each wound around one of the salient poles; and a commutator electrically connected to the armature windings. The rotor may further include a brush configured to periodically come into contact with the commutator in accordance with a rotation of the rotor to change a direction of an armature current flowing through the armature windings. The end plate may include, on an inner surface thereof, a brush holder for housing the brush.

Electrical equipment includes at least: the motor; a load connected to the motor, drivingly connected to the rotary shaft protruding through the through-hole outside the end plate, and including a driven part driven in accordance with the rotation of the motor; and the seal ring that is the annular elastic body in the annular housing space. The seal ring may be pressed from a surface of the load toward the bottom of the frame to abut on at least a first corner defined by the bottom of the step and the inner circumferential surface of the frame, a second corner defined by the surface of the load and the inner circumferential surface of the frame, and a third corner defined by the surface of the load and the side surface of the step.

This configuration causes the seal ring to abut on the first to third corners that serve as paths of moisture or any other fluid entering from outside, and makes it possible to reliably prevent the entry of the moisture into the frame or the load. This allows achievement of highly-reliable electrical equipment.

In one preferred embodiment, the seal ring has an X-shaped cross section.

This configuration causes the seal ring to abut on the bottom of the step, on which the seal ring is placed, at two points. This makes it possible to stabilize the position of the seal ring in the annular housing space in which the seal ring is located.

The seal ring may have a Y- or T-shaped cross section.

### ADVANTAGES OF THE INVENTION

As described above, the present invention enables providing a highly reliable motor that prevents entry of moisture or any other fluid into a frame, even if an end plate is deformed under the influence of heat or a pressure.

### BRIEF DESCRIPTION OF THE DRAWINGS

[FIG. 1] FIG. 1 is a perspective view showing an appearance of a motor according to an embodiment.
[FIG. 2] FIG. 2 is a schematic cross-sectional view taken along line II-II in FIG. 1.
[FIG. 3] FIG. 3 is a schematic cross-sectional view of a main part of electric equipment according to the embodiment.
[FIG. 4] FIG. 4 is a schematic view illustrating deformations of an end plate and a seal ring over time for comparison.
[FIG. 5] FIG. 5 is a schematic cross-sectional view showing a joint between an end plate and a frame according to the embodiment.
[FIG. 6] FIG. 6 is a schematic view illustrating deformations of the end plate and a seal ring over time according to the embodiment.
[FIG. 7] FIG. 7 is a schematic cross-sectional view showing a joint between the end plate and the frame according to a first variation.
[FIG. 8] FIG. 8 is a schematic cross-sectional view showing a joint between another end plate and the frame according to the first variation.
[FIG. 9] FIG. 9 is a schematic cross-sectional view showing a joint between the end plate and the frame according to a second variation.

### DESCRIPTION OF EMBODIMENTS

Now, an embodiment of the present invention will be described in detail with reference to the drawings. The following description of the advantageous embodiment is mere examples in nature, and is not at all intended to limit the scope, applications or use of the present disclosure.

### (Embodiment)

### [Configurations of Motor and Electric Equipment]

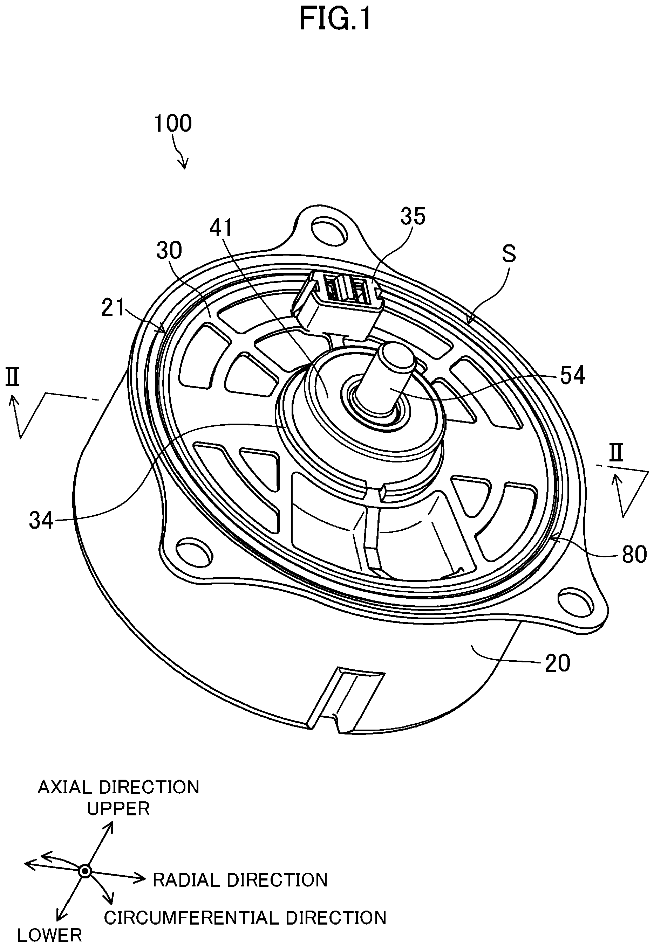

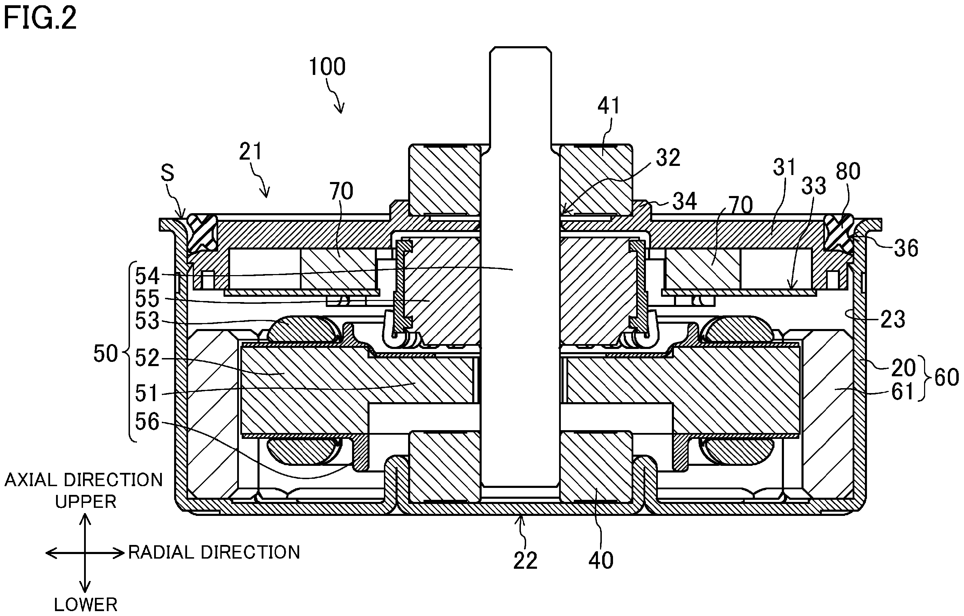

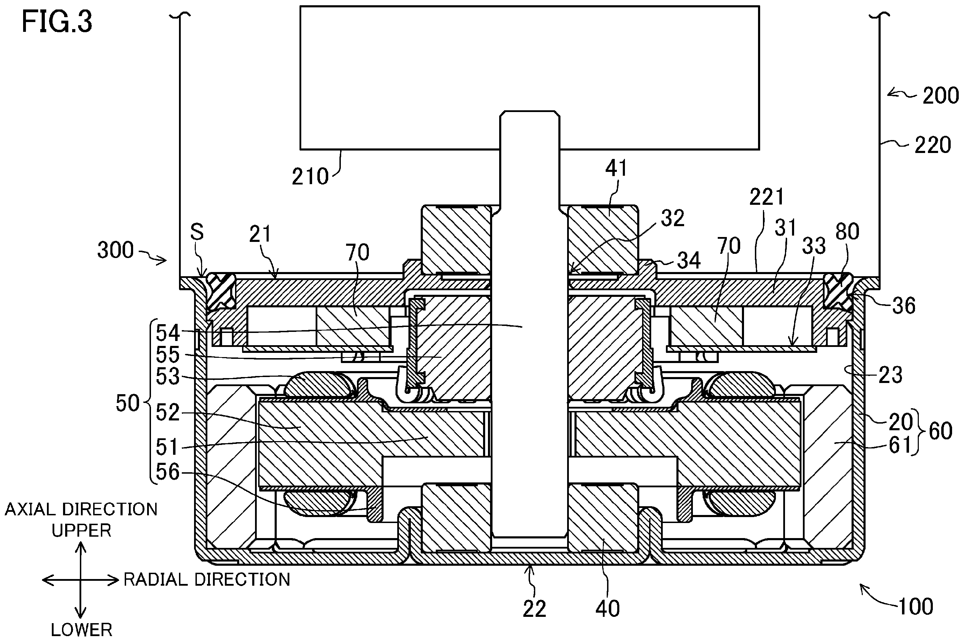

FIG. 1 is a perspective view of an appearance of a motor according to this embodiment. FIG. 2 is a schematic cross-sectional view taken along line II-II in FIG. 1. FIG. 3 is a schematic cross-sectional view of a main part of electric equipment according to this embodiment. As shown in FIGS. 1 and 2, a motor 100 includes a frame 20, an end plate 30, bearings 40 and 41, a rotor 50, a stator 60, brushes 70, and a seal ring 80. As shown in FIG. 3, electric equipment 300 includes a load 200 and the motor 100. In the following description, the longitudinal direction of a rotary shaft 54 which is a part of the rotor 50 may be referred to as the word "axial direction" or "axially", the direction in which the radius of the end plate 30 extends may be referred to as the word "radial direction" or "radially", and the direction in which the circumference of the end plate 30 extends may be referred to as the word "circumferential direction" or "circumferentially". In the axial direction, an area closer to the end of the frame 20 provided with the end plate 30 may be referred to as a "upper" or "top" and "upward" means "toward the upper area or portion", whereas an area closer to the bottom of the frame 20 which is opposite to the top may be referred to as a "lower" or "bottom" and "downward" means "toward the lower area or portion." For the purpose of illustration, the details of the load 200 are not shown in FIG. 3.

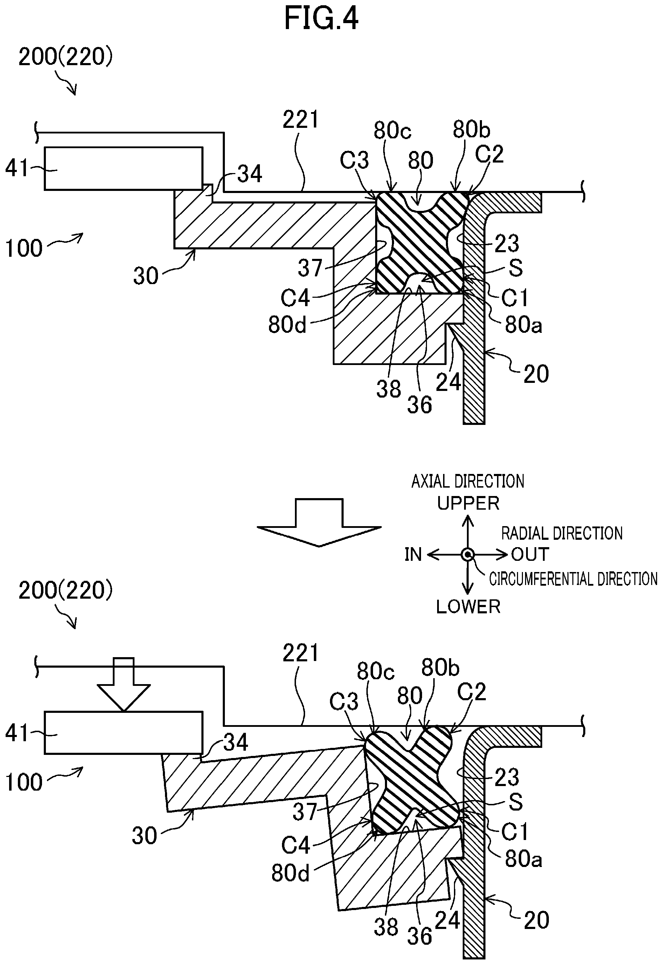

The frame 20 is a bottomed metal member in the shape of a short cylinder including a flange around an opening 21 on its top. The frame 20 has, on its bottom, a through-hole 22 penetrated by an end of the rotary shaft 54. In an upper part of an inner circumferential surface 23 of the frame 20, a plurality of plate supports 24 (see FIGS. 4 to 9) are arranged circumferentially at intervals. The plate supports 24 abut on the inner surface of the end plate 30 to support the end plate 30.

The end plate 30 is a plate member formed by molding a resin material and includes a substantially disk-like base 31, a through-hole 32, a brush holder 33, a bearing holder 34, a wire outlet 35, and a step 36. The through-hole 32 is located at the center of the base 31. The brush holder 33 is located on the inner surface of the base 31. The bearing holder 34 is located on the outer surface of the base 31. Electric wires for supplying electric power from the outside to the motor 100 are led out of the wire outlet 35. The step 36 is located on the outer surface, on the outer circumference of the base 31. The shape of the end plate 30, particularly the shape of the step 36, will be described later in detail. For the purpose of illustration, the electric wires led out of the wire outlet 35 are not shown in the drawings. As described above, the surface of the end plate 30 facing the inside of the frame 20 may be referred to as an "inner surface" of the end plate 30. On the other hand, the surface of the end plate 30 opposite to the inner surface may be referred to as the "outer surface" of the end plate 30.

The end plate 30 is positioned with respect to the frame 20 and then press-fitted into the opening 21 of the frame 20. The inner surface of the end plate 30 abuts on the plate supports 24 on the frame 20. The end plate 30 is located on the frame 20 so as to cover the opening 21. The rotor 50 is housed in a space defined by the frame 20 and the end plate 30. The rotary shaft 54 penetrates the through-hole 22 of the frame 20 and the through-hole 32 of the end plate 30, and protrudes outside the end plate 30. The rotary shaft 54 is rotatably supported by bearings 40 and 41 closing the through-holes 22 and 32, respectively.

The rotor 50 includes an armature core 51, salient poles 52, armature windings 53, the rotary shaft 54, a commutator 55, and insulators 56. The armature core 51 includes the salient poles 52 protruding radially outward and arranged circumferentially at predetermined intervals. Each armature winding 53 is wound around one of the salient poles 52 with the insulator 56, which is an insulating resin, interposed therebetween. The commutator 55 is connected to lead-out wires of the armature windings 53 led out of the armature core 51. The rotary shaft 54 is located at an axial center of the rotor 50, penetrates the centers of the armature core 51 and the commutator 55, and is connected to the armature core 51 and the commutator 55.

The stator 60 includes the frame 20 and a plurality of permanent magnets 61 arranged circumferentially at predetermined intervals on the inner circumferential surface 23 of the frame 20. Circumferentially adjacent ones of the permanent magnets 61 have different polarities. The frame 20 also functions as a yoke constituting, together with the permanent magnets 61, a magnetic circuit.

The pair of brushes 70 are made of a carbon brush material, such as graphite, containing a solid lubricant. Each brush is held in one of brush holders 33 on the inner surface of the end plate 30 and is pressed by a brush spring (not shown) to the commutator 55.

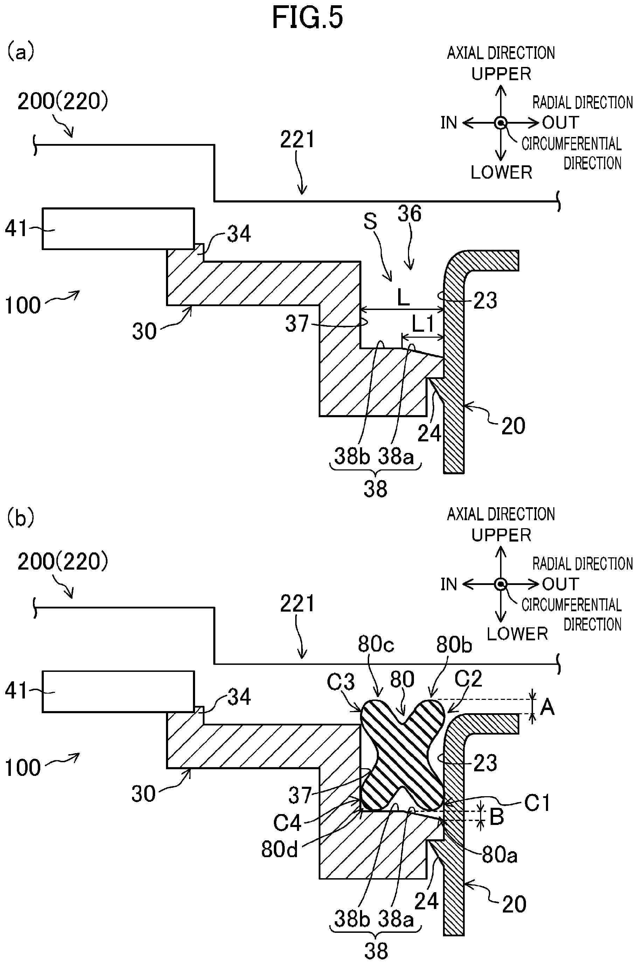

The seal ring 80 is made of an annular elastic body made of, for example, an ethylene propylene diene rubber (EPDM), a nitrile rubber, or a fluorinated rubber. The seal ring has an X-shaped cross section with four tips 80a to 80d (see FIGS. 4 and 5). The seal ring 80 is housed in an annular housing space S defined between a step 36 on the outer circumference surface of the outer surface of the end plate 30 and an inner circumferential surface 23 of the frame 20 facing a side surface 37 of the step 36 (see FIGS. 4 and 5). The seal ring seals 80 the joint between the frame 20 and the end plate 30 to prevent the entry of moisture or any other fluid from the outside into the frame 20. Note that the annular housing space S is an open space with an open top.

As shown in FIGS. 1 and 2, the motor 100 may include the seal ring 80 in advance. Alternatively, at the assembly of the electric equipment 300 shown in FIG. 3, the seal ring 80 may be housed in the annular housing space S in the motor 100, and then the load 200 may be connected to the motor 100.

An operation of the motor 100 configured as described above will be described.

Electric power is supplied from the outside through the electric wires led out of the wire outlet 35 in the end plate 30 to the motor 100. This allows an armature current to flow through the brushes 70 and the commutator 55 to the armature windings 53. A torque occurs between the magnetic flux generated in the stator 60 and the armature current flowing through the armature windings 53, whereby the rotary shaft 54 is supported by the bearings 40 and 41 to rotate. In accordance with the rotation of the rotary shaft 54, the contact and separation between the brushes 70 and the commutator 55 are cyclically repeated. With this cycle, the direction of the armature current flowing through the armature windings 53 changes.

As shown in FIG. 3, the load 200 is located on the top of the motor 100. The rotary shaft 54 protruding through the through-hole 32 outside the end plate 30 is drivingly connected to a driven part 210. The driven part 210 includes a mechanical element (not shown) that rotates in accordance with the rotation of the rotary shaft 54 in the direction same as or opposite to the rotation or converts the rotary motion into a linear motion. The load 200 is a hydraulic pump, for example. The configuration is however not limited thereto.

An outer shell 220 of the load 200 is assembled to the motor 100 with its surface 221 abutting on the flange of the frame 20 and the tips 80b and 80c of the seal ring 80. Note that the motor 100 and the load 200 are arranged with the surface 221 of the load 200 spaced apart from the outer surface of the end plate 30 at a predetermined clearance. The outer shell 220 is, for example, a block made of aluminum. The configuration is however not limited thereto.

By being pressed downward, that is, toward the bottom of the frame 20, from the surface 221 of the load 200, the seal ring 80 is compressed and deformed. Accordingly, the four tips 80a to 80d abut on four corners C1 to C4 (see FIGS. 4 and 5), respectively, of the space defined by the annular housing space S and the surface 221 of the load 200. The tip 80a abuts on the first corner C1 defined by the bottom 38 of the step 36 in the end plate 30 and the inner circumferential surface 23 of the frame 20. The tip 80b abuts on the second corner C2 defined by the inner circumferential surface 23 of the frame 20 and the surface 221 of the load 200. Note that the top of the opening 21 of the frame 20 expands to receive the end plate 30 inserted thereinto. Accordingly, at the second corner C2, the tip 80b of the seal ring 80 may insufficiently abut on the inner circumferential surface 23 of the frame 20 or may rather mainly abut only on the surface 221 of the load 200. The tip 80c abuts on the third corner C3 defined by the surface 221 of the load 200 and the side surface 37 of the step 36 in the end plate 30. The tip 80d abuts on the fourth corner C4 defined by the side surface 37 of the step 36 in the end plate 30 and the bottom 38 of the step 36. In this manner, the seal ring 80 abuts on the load 200, the frame 20, and the end plate 30 and a pressure is applied to the contact surfaces. This allows sealing between the frame 20 and the end plate 30 and between the frame 20 and the load 200 to prevent the entry of moisture from the outside through the load 200 into the frame 20. The sealing between the end plate 30 and the load 200 allows reduction in the adhesion of moisture or any other fluid to the bearing 41 or the rotary shaft 54.

[Findings Underlying the Present Invention]

FIG. 4 is a schematic view illustrating deformations of an end plate and a seal ring over time for comparison. For the purpose of illustration, the components of the motor 100 other than the frame 20, the end plate 30, the seal ring 80, and the bearing 41 are not shown. With respect to the load 200, only a part of the outer shell 220 including the surface 221 is shown.

In FIG. 4, the upper view shows a state immediately after the assembly of the motor 100 and the load 200. In this state, the members maintain the positional relationships as designed within the range of an assembly tolerance. In this state, a pressure is applied from the load 200 onto the motor 100. For example, in the case shown in FIG. 4, a pressure is applied through the bearing 41 housed in the bearing holder 34 to the center of the end plate 30. Note that, if the bearing 41 is located inside the frame 20, a pressure is applied from the load 200 to the center of the end plate 30.

On the other hand, at the start of using the electric equipment 300, the temperatures of the motor 100 and the load 200 start to rise due to the driving of the motor 100, the operation of the load 200, or the ambient temperature around the electric equipment 300, for example. As described above, a temperature rise with a pressure applied to a resin material causes deformations of a resin material due to thermal creep. The end plate 30 molded from the resin material is deformed such that the center is pressed downward and, accordingly, the outer circumference is raised upward.

As a result, as shown in the lower portion of FIG. 4, the gap between the side surface 37 of the step 36 and the inner circumferential surface 23 of the frame 20 increases in the annular housing space S. In particular, at the first corner C1, the contact pressure of the tip 80a of the seal ring 80 pressing the inner circumferential surface 23 of the frame 20 decreases. The inventors found that this degraded the sealing properties of the seal ring 80 at the first corner C1 to facilitate the entry of a fluid such as moisture into the frame 20.

In view of the finding, the present inventors focused on the shape of the annular housing space S, particularly, the shape of the first corner C1 that is the direct path of the fluid entering the inside of the frame 20. The present inventors found that a change in the shape of the bottom 38 of the step 36 of the end plate 30 defining the annular housing space S allowed maintenance of the sealing properties at the first corner C1.

### [Configuration of Joint between End Plate and Frame]

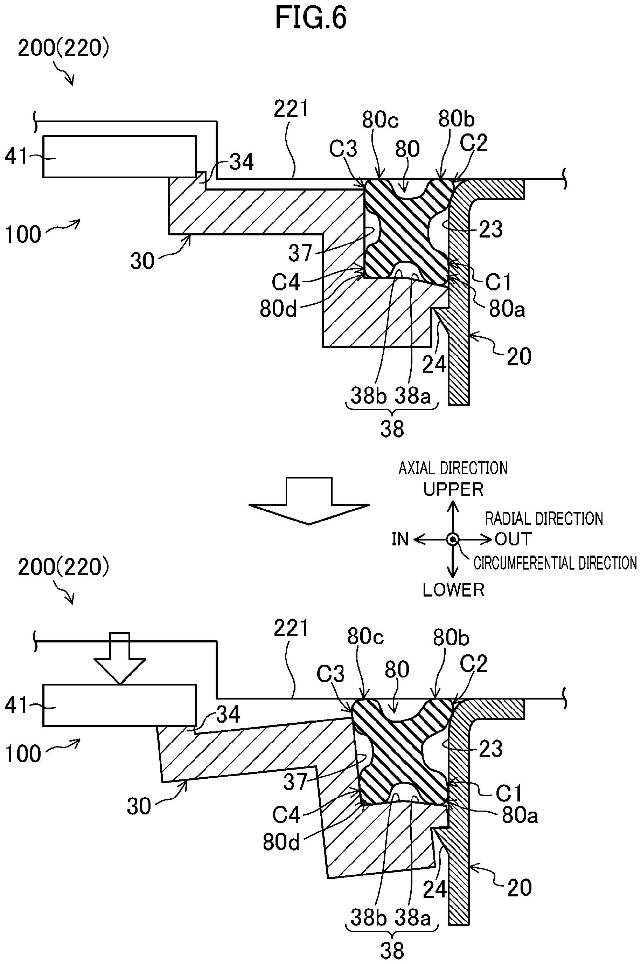

FIG. 5 is a schematic cross-sectional view of a joint between the end plate and the frame according to this embodiment. FIG. 6 is a schematic view illustrating deformations of the end plate and the seal ring over time according to this embodiment. In FIG. 5, (a) shows that the annular housing space S houses no seal ring 80, whereas (b) shows that the space houses the seal ring 80.

As shown in FIG. 5, the end plate 30 has, on the outer circumference of its outer surface, the step 36. In the end plate 30 shown in FIG. 4, the bottom 38 of the step 36 is a flat surface and orthogonal to the side surface 37. On the other hand, in this embodiment, the bottom 38 of the step 36 includes a first bottom 38a and a second bottom 38b. The first bottom 38a is located at a radially outer end, whereas the second bottom 38b is located radially inner end and continuous with the side surface 37 of the step 36 and the first bottom 38a. The first bottom 38a and the second bottom 38b are inclined in axially different directions. The first bottom 38a extends to the radially outer edge of the outer surface of the end plate 30 and is inclined radially outward and downward, that is, toward the bottom of the frame 20. In other words, the outer circumference of the outer surface of the end plate 30 is tapered downward. In addition, the side surface 37 of the step 36 and the second bottom 38b are orthogonal to each other. Note that "orthogonal" means "orthogonal" including a processing tolerance of the step 36. In this embodiment, the first bottom 38a is inclined at an angle of 15° with respect to the second bottom 38b in the axial cross-sectional view. The configuration is however not limited thereto. The inclination angle may vary as appropriate in accordance the radial width of the bottom 38, the axial height of the annular housing space S, the rate of the seal ring 80 filling the annular housing space S, the material of the seal ring 80, or the curvature radius of the tip 80a of the seal ring 80, for example.

In the case shown in FIG. 5, in the axial cross-sectional view, the radially outer edge of the outer surface of the end plate 30 is linearly cut out into the first bottom 38a. In other words, the first bottom 38a is an inclined surface with a radially outer edge linearly extending to the extension of the radially inner part of the end plate 30. Accordingly, the first corner C1 forms an acute angle in the axial cross-sectional view. Actually, the end plate 30 is a resin member integrally molded using a mold and the corners are not subjected to cut-out or any other processing. The first bottom 38a has a radial width L1 that is a half or less a radial width L of the bottom 38.

In (b) of FIG. 5, the load 200 does not press the underlying motor 100. In this state, when the seal ring 80 is housed in the annular housing space S defined by the step 36 described above and the inner circumferential surface 23 of the frame 20 facing the side surface 37 of the step 36, the tips 80b and 80c of the seal ring 80 protrude upward above the top plane of the annular housing space S, that is, toward the load 200. In this case, the seal ring 80 is housed in the annular housing space S such that a protrusion A is longer than the axial height B of the first bottom 38a, where A is the axial protrusion of the seal ring 80.

At the assembly of the load 200 to the motor 100 including the seal ring 80 in this manner, as shown in the upper portion of FIG. 6, the surface 221 of the load 200 abuts on the tips 80b and 80c of the seal ring 80 to press the seal ring 80 downward. As shown in the lower portion of FIG. 6, the thermal creep causes the load 200 to further press the center of the end plate 30 downward with the bearing 41 in the bearing holder 34 interposed therebetween. Accordingly, the four tips 80a to 80d of the seal ring 80 abut on the four corners C1 to C4, respectively, shown in the lower portion of FIG. 6. The seal ring 80 is then compressed and deformed to seal the joint between the frame 20 and the end plate 30 as well as the joint between the frame 20 and the surface 221 of the load 200.

While the first bottom 38a of the step 36 is the inclined surface described above, the second bottom 38b is inclined in a direction different from the first bottom 38a and orthogonal to the side surface 37. If the seal ring 80 abutting on the surface 221 of the load 200 is pressed downward, the tip 80d of the seal ring 80 is deformed at the fourth corner C4 with the same amount by the same contact surface pressure as in the case shown in the lower portion of FIG. 4. On the other hand, the first corner C1 has a larger spatial volume extending downward, that is, toward the bottom of the frame 20, than in the case shown in the lower portion of FIG. 4. The tip 80a of the seal ring 80 is displaceable along the first bottom 38a that is an inclined surface. Accordingly, as shown in the lower portion of FIG. 6, the amount of the tip 80a of the seal ring 80 that is deformed and bites into the first corner C1 is larger than that in the case shown in the lower portion of FIG. 4. With an increase in the amount of the bite, the contact surface pressure of the seal ring 80 increases more at the first corner C1 than in the case shown in the lower portion of FIG. 4. In this state, the outer circumference of the end plate 30 is deformed to rise upward due to the thermal creep. Then, the contact surface pressure of the tip 80a of the seal ring 80 pressing the inner circumferential surface 23 of the frame 20 decreases at the first corner C1 as with the case shown in FIG. 4. In this embodiment, however, the contact surface pressure of the seal ring 80 at the first corner C1 is raised in advance as described above. This makes it possible to sufficiently cover the above-described decrease in the contact surface pressure of the seal ring 80 at the first corner C1 and to prevent the entry of moisture or any other fluid into the frame 20.

### [Effects etc.]

As described above, in the motor 100 according to this embodiment, the end plate 30 made of resin and covering the opening 21 of the frame 20 has the step 36 in the outer circumference of its outer surface. The step 36 has the bottom 38 that includes the first bottom 38a located radially outward, extending to the radially outer edge of the outer surface of the end plate 30, and is inclined radially outward and downward, that is, toward the bottom of the frame 20. The annular housing space S defined between the step 36 formed in this manner and the inner circumferential surface 23 of the frame 20 facing the side surface 37 of the step 36 serves as the space for housing the seal ring 80.

With this configuration, assume that the seal ring 80 is housed in the annular housing space S and a pressing force is applied downward from above onto the seal ring 80. In this case, the amount of the seal ring 80 biting into the first corner C 1 increases to raise the contact surface pressure of the seal ring 80. This allows maintenance of the sealing properties at the first corner C1 and prevention in the entry of moisture or any other fluid into the frame 20, thereby achieving a highly reliable motor 100.

The first bottom 38a has the radial width L1 that is the half or less the radial width L of the bottom 38. This reduces a decrease in the amount of radial compression and deformation of the tip 80a of the seal ring 80 at the first corner C1 and allows maintenance of the contact surface pressure onto the inner circumferential surface 23 of the frame 20 at a desired value or more. This allows maintenance of the sealing properties at the first corner C1 even at a deformation of the end plate 30 due to the thermal creep.

When the seal ring 80 is housed in the annular housing space S, the axial protrusion A of the seal ring 80 is longer than the axial height B of the first bottom 38a. This reduces a decrease in the rate of the seal ring 80 filling the annular housing space S and ensures sufficient sealing properties of the seal ring 80.

Out of the four corners C1 to C4 shown in FIGS. 4 to 6, moisture or any other fluid is most likely to enter the second corner C2 from the outside. There is however mostly a need for the first corner C1 to maintain the sealing properties to ensure the reliability of the motor 100. If moisture or any other fluid enters through the third corner C3, the damages of the bearing 41 and the rotary shaft 54 increase. This may degrade the performance of the motor 100 and eventually the electric equipment 300.

### <First Variation>

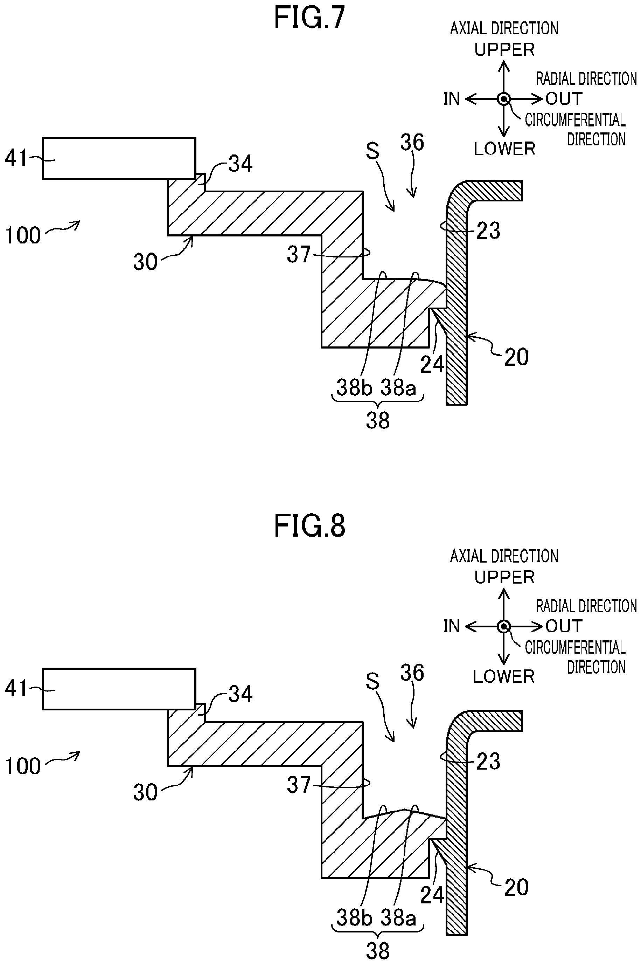

FIG. 7 is a schematic cross-sectional view of a joint between the end plate and the frame according to this variation. FIG. 8 is a schematic cross-sectional view of a joint between another end plate and the frame. For the purpose of illustration, the seal ring 80 is not shown in FIGS. 7 and 8.

An example has been described in FIGS. 5 and 6 where, in the axial cross-sectional view, the radially outer edge of the outer surface of the end plate 30 is linearly cut out into the first bottom 38a. The shape of the first bottom 38a may be determined as described above to increase the spatial volume of the first corner C1 extending downward or incline the first bottom 38a and the second bottom 38b in the different axial directions. Accordingly, as shown in FIG. 7, the outer edge of the radially outer surface of the end plate 30 may have a fillet that curves radially outward toward the bottom of the frame 20, that is, may be rounded. As shown in FIG. 8, the second bottom 38b may be inclined opposite to the first bottom 38a so that the bottom 38 has a projection. In the case of FIG. 8, the shape of the first bottom 38a may be in the shape shown in FIG. 7. Each case allows maintenance of the sealing properties at the first corner C1 and prevention in the entry of moisture or any other fluid into the frame 20, thereby achieving highly reliable motor 100 and electric equipment 300.

### <Second Variation>

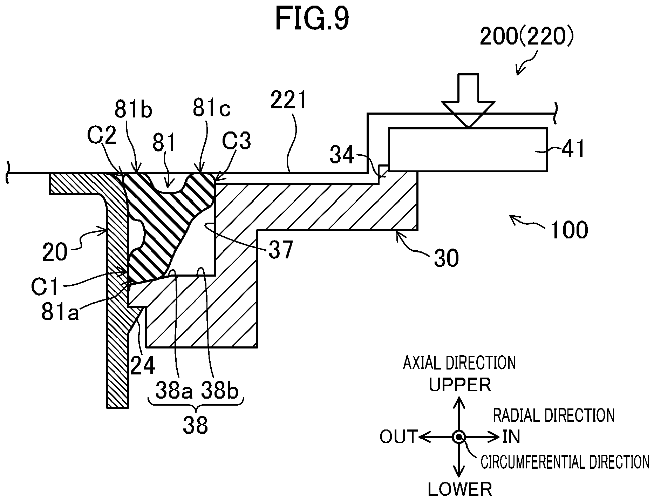

FIG. 9 is a schematic cross-sectional view of a joint between the end plate and the frame according to this variation.

In the configuration according to the embodiment, the seal ring 80 has the X-shaped cross section as shown in FIGS. 5 and 6. On the other hand, unlike in the configuration, the seal ring 81 has a Y- or deformed T-shaped cross section in the configuration according to this variation.

Out of the four corners C1 to C4 shown in FIG. 3, the fourth corner C4 has the side surface 37 and the second bottom 38b of the step 36 molded integrally by a resin. Moisture or any other fluid is much less likely to enter the inside of the frame 20 through the fourth corner than the other corners. Accordingly, as shown in FIG. 9, a seal ring 81 with three tips 81a to 81c may be used and the tips 81a to 81c may abut on the first to third corners C1 to C3. This case also allows maintenance of the sealing properties in the motor 100 and prevention in the entry of moisture or any other fluid into the frame 20, thereby achieving highly reliable motor 100 and electric equipment 300.

Needless to mention, the seal ring 81 in the shape shown in FIG. 9 is also applicable to the shapes shown in FIGS. 7 and 8, that is, the case where the first bottom 38a has a fillet or the case where the second bottom 38b is inclined opposite to the first bottom 38a.

The configuration according to this variation also reduces distortions of the seal ring 81 when being housed and distributes the contact surface pressure throughout the cross section of the seal ring 81. The configuration provides thus excellent sealing properties with less leakage. Burrs occurring at the molding of the seal ring 81 are located out of the contact surface, namely, in the dents between the adjacent tips. The configuration provides thus excellent sealing properties, which is needless to mention.

### (Other Embodiments)

In the embodiment described above including the first and second variations, the bottom 38 of the step 36 in the end plate 30 may be an inclined surface extending linearly from the side surface 37 of the step 36 to the radially outer edge of the outer surface of the end plate 30. An example has been described above in the embodiment where the motor 100 is the brushed motor. The configuration is however not limited thereto. The motor may be, for example, a brushless motor or another type of motor. In addition, the motor 100 has been described above in the embodiment as what is called an "inner rotor motor" including the stator 60 radially outside the rotor 50. Needless to mention, the motor may be of another type, for example, what is called an "outer rotor motor" including the rotor 50 radially outside the stator 60 at a predetermined distance.

The bearing 41 at the through-hole 32 of the end plate 30 is housed in the bearing holder 34 and abuts on the outer surface of the end plate 30. Instead, the bearing 41 may be located on the inner surface of the end plate 30 and housed inside the frame 20.

The brush holders 33 integral with the end plate 30 house the associated brushes 70. The brush holders 33 may be separated from the end plate 30 inside the frame 20 and house the associated brushes 70.

In the embodiment described above, the stator 60 includes the frame 20 and the plurality of permanent magnets 61. However, the stator 60 may be another configuration obtained by, for example, winding field windings around a plurality of field poles arranged circumferentially at predetermined intervals.

### INDUSTRIAL APPLICABILITY

The motor according to the present invention allows prevention in the entry of moisture or oil from the outside and is thus useful for and applicable to electric equipment including a fluid pump such as a hydraulic pump or electric equipment located in an external environment with a high temperature.

### DESCRIPTION OF REFERENCE CHARACTERS

- 20: Frame
- 21: Opening
- 22: Through-Hole
- 23: Inner Circumferential Surface
- 24: Plate Support
- 30: End Plate
- 31: Base
- 32: Through-Hole
- 33: Brush Holder
- 34: Bearing Holder
- 35: Wire Outlet
- 36: Step
- 37: Side Surface of Step 36
- 38: Bottom of Step 36
- 38a: First Bottom
- 38b: Second Bottom
- 40, 41: Bearing
- 50: Rotor
- 51: Armature Core
- 52: Salient Pole
- 53: Armature Winding
- 54: Rotary Shaft
- 55: Commutator
- 56: Insulator
- 60: Stator
- 61: Permanent Magnet
- 70: Brush
- 80: Seal Ring
- 80a to 80d: Tip
- 81: Seal Ring
- 81a to 81c: Tip
- 100: Motor
- 200: Load
- 210: Driven Part
- 220: Edge
- 221: Surface of Load 200
- 300: Electrical Equipment
- C1 to C4: First to Fourth Corners
- A: Protrusion of Seal Ring 80
- B: Axial Height of First Bottom 38a
- S: Annular Housing Space

## Claims

1. A motor (100) connectable to a load (200) and comprising at least:
a frame (20) in a shape of a bottomed cylinder with an open end;
a stator (60) housed in and fixed to the frame (20);
a rotor (50) facing the stator (60) at a predetermined distance;
an end plate (30) above an opening (21) of the frame (20), the end plate (30) being a resin plate member covering the opening (21) and having, at a center (31) thereof, a through-hole (32) penetrated by a rotary shaft (54); and
a bearing (41) closing the through-hole (32) of the end plate (30) and rotatably supporting the rotary shaft (54),
the end plate (30) having, on an outer periphery of an outer surface thereof, a step (36) with a side surface (37) radially facing an inner circumferential surface (23) of the frame (20),
the motor (100) further comprising an annular housing space (S) defined between the side surface of the step (36) and the circumferential surface of the frame (20), the annular housing space (S) housing a seal ring (80) that is an annular elastic body, and
the step (36) having a bottom (38) with a part extending to a radially outer edge of the outer surface of the end plate (30) and inclined radially outward toward a bottom of the frame (20),
the bottom (38) of the step (36) includes:
a first bottom (38a) at a radially outer end thereof; and
at a radially inner end thereof, a second bottom (38b) continuous with the first bottom (38a), and
the first bottom (38a) extends to the radially outer edge of the outer surface of the end plate (30), and is inclined radially outward toward the bottom of the frame, whereas the second bottom (38b) is inclined in a direction axially different from the first bottom (38a),
wherein, before the assembly of the load (200) and the motor, an axial protrusion (A) of the seal ring (80) above the frame (20) is longer than the axial height (B) of the first bottom (38a) with respect to the second bottom (38b),
and wherein, at the assembly of the motor and the load (200), a pressure is applied from the load (200) onto the end plate (30) in the axial direction, such that the seal ring (80) is pressed from a surface of the load (200) toward the bottom of the frame (20).

2. The motor (100) of claim 1, wherein
the bottom (38) of the step (36) is an inclined surface extending linearly from the side surface (37) of the step (36) to the radially outer edge of the outer surface of the end plate (30).

3. The motor (100) of claim 1, wherein
the second bottom (38b) is orthogonal to the side surface (37) of the step (36).

4. The motor (100) of claim 1, wherein
the second bottom (38b) is a surface inclined opposite to the first bottom (38a).

5. The motor (100) of any one of claims 1 to 3, wherein
the first bottom (38a) is an inclined surface extending linearly from the radially outer edge to a radially inner part of the end plate (30).

6. The motor (100) of any one of claims 1 to 3, wherein
the radially outer edge of the first bottom (38a) has a fillet curving radially outward toward the bottom of the frame (20).

7. The motor (100) of any one of claims 1 to 6 wherein
the first bottom (38a) has a radial width that is a half or less a radial width of the bottom (38) of the step (36).

8. The motor (100) of any one of claims 1 to 7, wherein
the rotor (50) includes:
an armature core (51) penetrated by and connected to the rotary shaft (54);
salient poles (52) arranged circumferentially at a predetermined interval in the armature core (51);
armature windings (53), each wound around one of the salient poles (52); and
a commutator (55) electrically connected to the armature windings (53),
the rotor (50) further includes a brush (70) configured to periodically come into contact with the commutator (55) in accordance with a rotation of the rotor (50) to change a direction of an armature current flowing through the armature windings (53), and
the end plate (30) includes, on an inner surface thereof, a brush holder (33) for housing the brush (70).

9. Electrical equipment (300), comprising at least:
the motor (100) of any one of claims 1 to 8;
a load (200) connected to the motor (100), drivingly connected to the rotary shaft (54) protruding through the through-hole (32) outside the end plate (30), and including a driven part driven in accordance with the rotation of the motor (100); and
the seal ring (80) that is the annular elastic body in the annular housing space (S),
the seal ring (80) being pressed from a surface of the load (200) toward the bottom of the frame (20) to abut on at least a first corner (C1) defined by the bottom (38) of the step (36) and the inner circumferential surface of the frame (20), a second corner (C2) defined by the surface of the load (200) and the inner circumferential surface of the frame (20), and a third corner (C3) defined by the surface of the load (200) and the side surface (37) of the step (36).

10. The electrical equipment (300) of claim 9, wherein
the seal ring (80) has an X-shaped cross section.

11. The electrical equipment (300) of claim 9, wherein
the seal ring (80) has a Y-shaped cross section.

## Patentansprüche

1. Ein Motor (100), der mit einer Last (200) verbunden werden kann und mindestens Folgendes umfasst:
einen Rahmen (20) in Form eines mit einem Boden versehenen Zylinders mit einem offenen Ende;
einen Stator (60), der in dem Rahmen (20) untergebracht und an diesem befestigt ist;
einen Rotor (50), der dem Stator (60) in einem vorbestimmten Abstand gegenüberliegt;
eine Endplatte (30) über einer Öffnung (21) des Rahmens (20), wobei die Endplatte (30) ein Harzplattenelement ist, das die Öffnung (21) abdeckt und in seiner Mitte (31) ein Durchgangsloch (32) aufweist, das von einer Drehwelle (54) durchdrungen wird; und
ein Lager (41), das das Durchgangsloch (32) der Endplatte (30) verschließt und die Drehwelle (54) drehbar trägt, wobei
die Endplatte (30) an einem Außenumfang ihrer Außenfläche eine Stufe (36) mit einer Seitenfläche (37) aufweist, die radial zu einer inneren Umfangsfläche (23) des Rahmens (20) weist,
der Motor (100) ferner einen ringförmigen Gehäuseraum (S) umfasst, der zwischen der Seitenfläche der Stufe (36) und der Umfangsfläche des Rahmens (20) definiert ist, wobei der ringförmige Gehäuseraum (S) einen Dichtungsring (80) aufnimmt, der ein ringförmiger elastischer Körper ist, und
die Stufe (36) einen Boden (38) mit einem Teil aufweist, der sich zu einer radial äußeren Kante der Außenfläche der Endplatte (30) erstreckt und radial nach außen zu einem Boden des Rahmens (20) hin geneigt ist,
der Boden (38) der Stufe (36) umfasst:
einen ersten Boden (38a) an einem radial äußeren Ende davon; und
an einem radial inneren Ende davon einen zweiten Boden (38b), der mit dem ersten Boden (38a) zusammenhängt, und
der erste Boden (38a) sich bis zu dem radial äußeren Rand der Außenfläche der Endplatte (30) erstreckt und radial nach außen zu dem Boden des Rahmens hin geneigt ist, während der zweite Boden (38b) in einer Richtung geneigt ist, die sich axial von dem ersten Boden (38a) unterscheidet,
wobei vor dem Zusammenbau der Last (200) und des Motors ein axialer Vorsprung (A) des Dichtungsrings (80) oberhalb des Rahmens (20) länger ist als die axiale Höhe (B) des ersten Bodens (38a) in Bezug auf den zweiten Boden (38b),
und wobei bei der Montage des Motors und der Last (200) ein Druck von der Last (200) auf die Endplatte (30) in der axialen Richtung ausgeübt wird, so dass der Dichtungsring (80) von einer Oberfläche der Last (200) in Richtung des Bodens des Rahmens (20) gedrückt wird.

2. Der Motor (100) nach Anspruch 1, wobei
der Boden (38) der Stufe (36) eine geneigte Fläche ist, die sich linear von der Seitenfläche (37) der Stufe (36) zu dem radial äußeren Rand der Außenfläche der Endplatte (30) erstreckt.

3. Der Motor (100) nach Anspruch 1, wobei
der zweite Boden (38b) orthogonal zu der Seitenfläche (37) der Stufe (36) ist.

4. Der Motor (100) nach Anspruch 1, wobei
der zweite Boden (38b) eine Fläche ist, die gegenüber dem ersten Boden (38a) geneigt ist.

5. Der Motor (100) nach einem der Ansprüche 1 bis 3, wobei
der erste Boden (38a) eine geneigte Fläche ist, die sich linear von der radial äußeren Kante zu einem radial inneren Teil der Endplatte (30) erstreckt.

6. Der Motor (100) nach einem der Ansprüche 1 bis 3, wobei
der radial äußere Rand des ersten Bodens (38a) eine Ausrundung aufweist, die sich radial nach außen in Richtung des Bodens des Rahmens (20) krümmt.

7. Der Motor (100) nach einem der Ansprüche 1 bis 6, wobei
der erste Boden (38a) eine radiale Breite aufweist, die die Hälfte oder weniger der radialen Breite des Bodens (38) der Stufe (36) beträgt.

8. Der Motor (100) nach einem der Ansprüche 1 bis 7, wobei
der Rotor (50) umfasst:
einen Ankerkern (51), der von der Drehwelle (54) durchdrungen und mit dieser verbunden ist;
ausgeprägte Pole (52), die in einem vorbestimmten Abstand in dem Ankerkern (51) in Umfangsrichtung angeordnet sind;
Ankerwicklungen (53), die jeweils um einen der ausgeprägten Pole (52) gewickelt sind; und
einen Kommutator (55), der elektrisch mit den Ankerwicklungen (53) verbunden ist,
der Rotor (50) ferner eine Bürste (70) aufweist, die dazu eingerichtet ist, in Übereinstimmung mit einer Drehung des Rotors (50) periodisch in Kontakt mit dem Kommutator (55) zu kommen, um eine Richtung eines Ankerstroms zu ändern, der durch die Ankerwicklungen (53) fließt, und
die Endplatte (30) an ihrer Innenfläche einen Bürstenhalter (33) zur Aufnahme der Bürste (70) aufweist.

9. Ein elektrisches Gerät (300), umfassend mindestens:
den Motor (100) nach einem der Ansprüche 1 bis 8;
eine mit dem Motor (100) verbundene Last (200), die antriebsmäßig mit der Drehwelle (54) verbunden ist, die durch das Durchgangsloch (32) nach außerhalb der Endplatte (30) hindurchragt, und einen angetriebenen Teil enthält, der entsprechend der Drehung des Motors (100) angetrieben wird; und
den Dichtungsring (80), der der ringförmige elastische Körper in dem ringförmigen Gehäuseraum (S) ist,
wobei der Dichtungsring (80) von einer Oberfläche der Last (200) in Richtung des Bodens des Rahmens (20) gedrückt wird, um an mindestens einer ersten Ecke (C1), die durch den Boden (38) der Stufe (36) und die innere Umfangsfläche des Rahmens (20) definiert ist, einer zweiten Ecke (C2), die durch die Oberfläche der Last (200) und die innere Umfangsfläche des Rahmens (20) definiert ist, und einer dritten Ecke (C3), die durch die Oberfläche der Last (200) und die Seitenfläche (37) der Stufe (36) definiert ist, anzuliegen.

10. Das elektrische Gerät (300) nach Anspruch 9, wobei
der Dichtungsring (80) einen X-förmigen Querschnitt aufweist.

11. Das elektrische Gerät (300) nach Anspruch 9, wobei
der Dichtungsring (80) einen Y-förmigen Querschnitt aufweist.

## Revendications

1. Moteur (100) pouvant être raccordé à une charge (200) et comprenant au moins :
un bâti (20) ayant la forme d'un cylindre à fond ouvert,
un stator (60) logé dans le bâti (20) et fixé à celui-ci,
un rotor (50) faisant face au stator (60) selon une distance prédéterminée,
une plaque terminale (30) au-dessus d'une ouverture (21) du bâti (20), la plaque terminale (30) étant un élément de plaque en résine couvrant l'ouverture (21) et présentant, en son centre (31), un trou de passage (32) pénétré par un arbre rotatif (54), et
un palier (41) fermant le trou de passage (32) de la plaque terminale (30) et supportant en rotation l'arbre rotatif (54) ;
la plaque terminale (30) ayant, sur une périphérie extérieure de sa surface extérieure, un gradin (36) dont une surface latérale (37) fait face radialement à une surface circonférentielle intérieure (23) du bâti (20),
le moteur (100) comprenant en outre un espace de logement annulaire (S) défini entre la surface latérale du gradin (36) et la surface circonférentielle du bâti (20), l'espace de logement annulaire (S) logeant une bague d'étanchéité (80) consistant en un corps élastique annulaire, et
le gradin (36) ayant un fond (38) dont une partie s'étend jusqu'à un bord radialement extérieur de la surface extérieure de la plaque terminale (30) et est inclinée radialement vers l'extérieur en direction d'un fond du bâti (20),
le fond (38) du gradin (36) comprenant :
un premier fond (38a) à une extrémité radialement extérieure de celui-ci, et
à une extrémité radialement intérieure de celui-ci, un deuxième fond (38b) dans la continuité du premier fond (38a), et
le premier fond (38a) s'étendant jusqu'au bord radialement extérieur de la surface extérieure de la plaque terminale (30) et étant incliné radialement vers l'extérieur en direction du fond du bâti, tandis que le deuxième fond (38b) est incliné dans une direction axialement différente du premier fond (38a),
étant entendu que, avant l'assemblage de la charge (200) et du moteur, une saillie axiale (A) de la bague d'étanchéité (80) au-dessus du bâti (20) est plus longue que la hauteur axiale (B) du premier fond (38a) par rapport au deuxième fond (38b),
et que, lors de l'assemblage du moteur et de la charge (200), une pression est appliquée par la charge (200) sur la plaque terminale (30) dans la direction axiale, de façon que la bague d'étanchéité (80) est pressée, depuis une surface de la charge (200), vers le fond du bâti (20).

2. Moteur (100) selon la revendication 1, dans lequel
le fond (38) du gradin (36) est une surface inclinée s'étendant linéairement depuis la surface latérale (37) du gradin (36) jusqu'à un bord radialement extérieur de la surface extérieure de la plaque terminale (30).

3. Moteur (100) selon la revendication 1, dans lequel
le deuxième fond (38b) est orthogonal à la surface latérale (37) du gradin (36).

4. Moteur (100) selon la revendication 1, dans lequel
le deuxième fond (38b) est une surface inclinée dans le sens opposé à celui du premier fond (38a).

5. Moteur (100) selon l'une quelconque des revendications 1 à 3, dans lequel
le premier fond (38a) est une surface inclinée s'étendant linéairement depuis le bord radialement extérieur jusqu'à une partie radialement intérieure de la plaque terminale (30).

6. Moteur (100) selon l'une quelconque des revendications 1 à 3, dans lequel
le bord radialement extérieur du premier fond (38a) présente un congé incurvé radialement vers l'extérieur en direction du fond du bâti (20).

7. Moteur (100) selon l'une quelconque des revendications 1 à 6, dans lequel
le premier fond (38a) a une largeur radiale égale ou inférieure à la moitié de la largeur radiale du fond (38) du gradin (36).

8. Moteur (100) selon l'une quelconque des revendications 1 à 7, dans lequel
le rotor (50) comprend :
un noyau d'induit (51) pénétré par l'arbre rotatif (54) et relié à celui-ci,
des pôles saillants (52) agencés circonférentiellement à un intervalle prédéterminé dans le noyau de l'induit (51),
des enroulements d'induit (53), chacun enroulé autour d'un des pôles saillants (52), et
un collecteur (55) connecté électriquement aux enroulements d'induit (53) ;
le rotor (50) comprend en outre un balai (70) conçu pour entrer périodiquement en contact avec le collecteur (55) en fonction d'une rotation du rotor (50) afin de changer la direction d'un courant d'induit circulant à travers les enroulements d'induit (53), et
la plaque terminale (30) comprend, sur sa surface intérieure, un support de balai (33) destiné à loger le balai (70).

9. Équipement électrique (300) comprenant au moins :
le moteur (100) selon l'une quelconque des revendications 1 à 8,
une charge (200) raccordée au moteur (100), reliée de manière motrice à l'arbre rotatif (54) faisant saillie à travers le trou de passage (32) à l'extérieur de la plaque terminale (30), et comprenant une partie entraînée en fonction de la rotation du moteur (100), et
la bague d'étanchéité (80), consistant en ledit corps élastique annulaire dans l'espace de logement annulaire (S) ;
la bague d'étanchéité (80) étant pressée, depuis une surface de la charge (200) vers le fond du bâti (20) pour venir en butée sur au moins un premier coin (C1) défini par le fond (38) du gradin (36) et la surface circonférentielle intérieure du bâti (20), un deuxième coin (C2) défini par la surface de la charge (200) et la surface circonférentielle intérieure du bâti (20), et un troisième coin (C3) défini par la surface de la charge (200) et la surface latérale (37) du gradin (36).

10. Équipement électrique (300) selon la revendication 9, dans lequel :
la bague d'étanchéité (80) a une section transversale en forme de X.

11. Équipement électrique (300) selon la revendication 9, dans lequel :
la bague d'étanchéité (80) a une section transversale en forme de Y
